# EUROPEAN PATENT SPECIFICATION

(11) **EP 0 503 938 B1**
(45) Date of publication and mention of the grant of the patent: **08.06.1994**
(21) Application number: 92302124.0
(22) Date of filing: 12.03.1992
(51) Int. Cl.: A01C 5/06, A01C 7/18

(54) **Star wheel seed planter**
Sternrad - Sägerät
Semoir à roue en étoile

(30) Priority: 13.03.1991 ZW 2891
(43) Date of publication of application: 16.09.1992
(73) Proprietor: TINTO INDUSTRIES LIMITED, Workington, Harare (ZW)
(72) Inventor: Mitchell, Alan, Greystone Park, Harare (ZW)
(74) Representative: Arthur, Bryan Edward

(56) References cited:
- WO-A-81/01093
- FR-A- 2 040 890
- GB-A- 2 001 513

## Description

### BACKGROUND OF THE INVENTION

The present invention concerns a device for placing seed into the soil at a specific pitch.

It is often required when planting seeds to have the seeds placed in the soil at regular distances apart. WO-A-8 101 093 discloses a device intended for this purpose This is sometimes difficult to achieve especially when there is a thick crop overburden lying on the soil. Furthermore, to dig holes for the seeds and then to sow the seeds afterwards is a labour intensive operation. It would be advantageous to be able to provide holes for the seeds and then sow the seeds in a single operation.

The star wheel seed planter, object of this invention, is particularly suitable for planting seeds into the soil through a rather thick crop residue laying on the soil, without the necessity to remove the crop residue. A proper penetration is achieved through the crop residue and the seeds are placed into the soil at regular distances.

### SUMMARY OF THE INVENTION

The device of the present invention consists of two star wheel formed discs with radiating spikes which are brought together by rotating the disc synchronously at an angle. Each spike is in its inner side provided with a hollow channel so that a funnel is internally formed when the spikes are brought together.

The means to place the seed into the above said funnel includes a hub disposed about the axis of rotation of the disc and mounted to rotate with the discs. The hub has cells with each cell having an associated pair of opposed formations on the discs. Each cell is being adapted to receive seed and to release the seed so it can fall into the funnel upon rotation of the discs.

The hub is preferably provided with a cover to retain the seed in the cell until the seed is released and to fall under gravity into the funnel.

### DESCRIPTION OF THE DRAWINGS

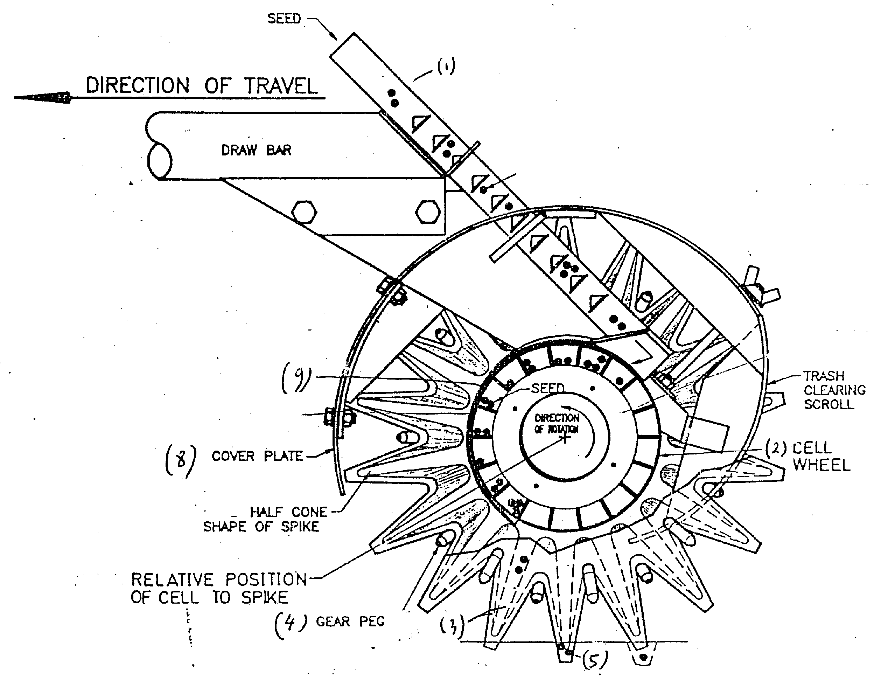

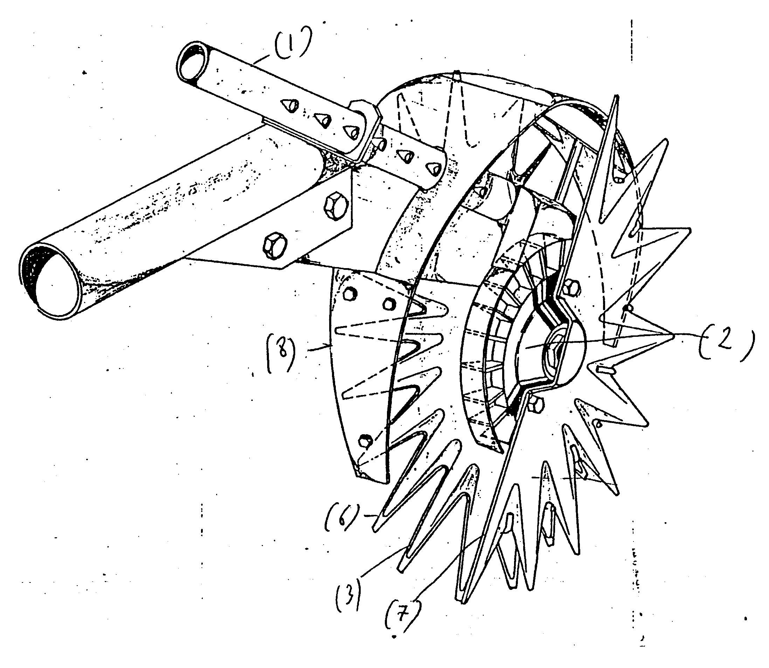

The invention will now be described in detail by referring to the drawings no. 1 and 2.

Drawing no. 1 shows the functioning of the star wheel seed planter. In the drawing is removed the near side star wheel disc to show the operating principle.

Drawing no. 2 shows the synochronizing of rotating star wheels and the opening and closing of the funnels.

Seed flows downward through pipe (1) into the planter where the seed is retained in cells of the rotating hub (2). From these cells the seed moves into the funnels (3), formed by the simultaneous coming together of two half cone shaped spikes of the rotating star wheels which spikes are provided with a hollow channel on the inner side. The funnel opens when by further rotating, the spikes move away from each other.

The funnels are formed by the successive coming together of the spikes as the star wheels rotate when the planter is pulled over the ground. Interlocking pegs (4) are provided on one wheel which engage with the base of the spikes on the other wheel, to ensure that the wheels rotate in unison. The pegs are sized such that they are able to engage with the spikes at all points of rotation of the wheels. An alternative method to ensure synchronous rotation would be to provide mitre gears bolted to the wheels.

The hub is provided with a cover strip (9) to retain the seed in the cell until the cell is positioned vertically above the corresponding funnel.

The synchronizing of the two star wheels is such that the funnel opens when the spikes have penetrated through the crop residue and have formed a hole into the soil (5). By moving forward the planter, the star wheels rotate and the planter places seed into the soil at regular distances in accordance with the specific pitch.

In drawing no 2 are shown clearly the two rotating star wheels (6) and (7) which are brought together synchronously at an angle. In this way by each rotation the spikes of the star wheels form a closed funnel (3), which opens at the lower position to release the seed (5) and, after further rotating, closes again to receive another seed to be placed.

Cover plates (8) are provided for protecting the rotating star wheels and to remove any soil stuck at the spikes.

The planter can be mounted on a spring loaded beam to be biased towards the soil to achieve a good penetration through any overburden. Any number of seed planters can be mounted to a tool bar to allow the simultaneous planting of seeds in parallel rows.

Although the illustrated device has been described in its application as a seed planter, its principles can be used in other devices in which small objects are to be arranged at regular distances apart.

## Claims

1. A device for placing seed or other small objects into the soil at a specific pitch characterised that the radiating spikes of two star wheel formed discs are brought together by rotating the discs synchronously at an angle and that each of the radiating spikes has on its inner side a hollow channel forming an internal closed funnel when the spikes are brought together and opens when by further rotating the spikes move away from each other.

2. A device according to claim 1 characterised that the means to place seed or small objects into the funnels consists of a hub disposed about the axis of rotation of the disc and mounted to rotate with the discs which hub is provided with cells adapted to receive the seed or the other small objects and to release them upon rotation of the discs so they can fall under gravity into the funnel.

3. A device according to claim 2 characterised that the hub is provided with a cover to retain the seed or the small objects in the cells until they are released and fall under gravity into the funnel.

4. A device according to claim 1 characterised that the two star wheel discs are protected by cover plates and which will remove any soil stuck at the piles.

5. A device according to claims 1 to 4 characterised that interlocking pegs are provided on one star wheel formed disc and engaged with the base of the spikes on the other star wheel formed disc, to ensure that they rotate in unison.

6. A device to place seed at a specific pitch into soil covered by a thick crop residue according to claims 1 to 4 in which seed flows downward through a pipe, is retained in cells of a rotating hub, and falls by gravity from the cells into a funnel, formed by two half conic shaped radiating spikes of star wheel formed discs rotating synchronously at an angle, so that the funnel is closed when the seed falls into it and, by further rotating, opens at the point of deepest penetration into the soil.

## Patentansprüche

1. Gerät zum Einbringen von Saatkörnern oder anderen kleinen Gegenständen mit bestimmtem Abstand in den Boden, **dadurch gekennzeichnet**, daß die strahlenartig abstehenden Speichen von zwei sternradförmigen Scheiben durch synchrones Drehen der Scheiben unter einem Winkel zusammengeführt werden und daß jede der Speichen auf ihrer Innenseite einen hohlen Kanal aufweist, der bei zusammengeführten Speichen einen internen geschlossenen Trichter bildet und sich öffnet, wenn durch weiteres Drehen die Speichen sich voneinanderweg bewegen.

2. Gerät nach Anspruch 1, **dadurch gekenn****zeichnet**, daß die Einrichtung zum Einbringen von Saatkörnern oder kleinen Gegenständen in die Trichter eine um die Drehachse der Scheiben angeordnete und mit diesen Scheiben drehbare Nabe ist, wobei die Nabe mit Zellen versehen ist, die die Saatkörner oder anderen kleinen Gegenstände aufnehmen und sie beim Drehen der Scheiben freigeben können, so daß sie unter der Schwerkraft in den Trichter fallen.

3. Gerät nach Anspruch 2, **dadurch gekenn****zeichnet**, daß die Nabe mit einer Abdeckung versehen ist, um die Saatkörner oder kleinen Gegestände in den Zellen zu halten, bis sie freigegeben werden und unter der Schwerkraft in den Trichter fallen.

4. Gerät nach Anspruch 1, **dadurch gekenn****zeichnet,** daß die beiden Sternradscheiben von Abdeckplatten geschützt sind, die an den Speichen haftendes Erdreich abstreifen.

5. Gerät nach Anspruch 1 bis 4, **dadurch ge****kennzeichnet**, daß auf einer der sternradförmigen Scheiben Mitnehmerstifte vorgesehen sind, die in den Fuß der Speichen der anderen sternradförmigen Scheibe eingreifen, um eine gemeinsame Drehung zu gewährleisten.

6. Gerät zum Einbringen von Saatkörners mit bestimmtem Abstand in dick von Ernteresten bedecktes Erdreich nach Anspruch 1 bis 4, **dadurch gekennzeichnet** dass die Saatkörner durch ein Rohr abwärts fließen, in Zellen einer drehenden Nabe vorgehalten werden und unter der Schwerkraft aus den Zellen in einen Trichter fallen, der von zwei halbkegelig geformten, strahlenartig abstehenden Speichen sternradförmiger, unter einem Winkel synchron umlaufender Scheiben gebildet ist, wobei der Trichter geschlossen ist, wenn die Saatkörner in ihn fallen, und bei weiterer Drehung am Punkt des tiefsten Eindringens in das Erdreich öffnet.

## Revendications

1. Dispositif destiné à placer une graine ou d'autres objets de petite taille dans le sol, selon un espacement spécifique, caractérisé en ce que les pointes rayonnantes de deux disques en forme de roue en étoile sont rassemblées en faisant tourner les disques de façon synchrone, selon un angle et en ce que chacune des pointes rayonnantes présente, sur sa face intérieure, un canal creux formant un entonnoir, fermé intérieurement lorsque les pointes sont assemblées et qui s'ouvre lorsque, suite à la poursuite de la rotation, les pointes s'éloignent les unes des autres.

2. Dispositif selon la revendication 1, caractérisé en ce que les moyens servant à placer une graine ou d'autres objets de petite taille dans les entonnoirs sont constitués d'un moyeu monté autour de l'axe de rotation du disque et monté de telle sorte qu'il tourne avec les disques, lequel moyeu est pourvu d'alvéoles susceptibles de recevoir la graine ou les autres objets de petite taille et de les libérer lors de la rotation des disques, de telle sorte qu'ils puissent tomber, sous l'effet de la gravité, dans l'entonnoir.

3. Dispositif selon la revendication 2, caractérisé en ce que le moyeu est pourvu d'un couvercle destiné à retenir la graine ou les objets de petite taille dans les alvéoles, jusqu'à ce qu'ils soient libérés et tombent, sous l'effet de la gravité, dans l'entonnoir.

4. Dispositif selon la revendication 1, caractérisé en ce que les deux disques en forme de roue en étoile sont protégés par des plaques de recouvrement qui enlèveront la terre qui resterait collée en paquets.

5. Dispositif selon les revendications 1 à 4, caractérisé en ce que des clavettes à enclenchement réciproque sont prévues sur un disque en forme de roue en étoile, qui coopèrent avec la base des pointes de l'autre disque en forme de roue en étoile, afin de garantir qu'ils tournent à l'unisson.

6. Dispositif destiné à placer une graine, selon un espacement spécifique, dans le sol recouvert d'un épais résidu de récolte, selon les revendications 1 à 4, dans lequel la graine passe, en direction du bas, à travers un tube, est retenue dans des alvéoles d'un moyeu rotatif et tombe, sous l'effet de la gravité, des alvéoles dans un entonnoir, formé par deux pointes rayonnantes semi-coniques, de disques en forme de roue en étoile tournant de façon synchrone, selon un angle, de telle sorte que l'entonnoir est fermé lorsque la graine tombe dedans et que, si la rotation est poursuivie, il s'ouvre au point de pénétration la plus profonde dans le sol.
